# EUROPEAN PATENT SPECIFICATION

(11) **EP 4 427 995 B1**
(45) Date of publication and mention of the grant of the patent: **25.11.2026**
(21) Application number: 23160269.9
(22) Date of filing: 06.03.2023
(51) Int. Cl.: B60W 30/095, B60W 40/08, G06V 20/58, G06V 20/59, G06V 40/18

(54) **METHOD OF ASSISTING A DRIVER OF A VEHICLE, AND A DRIVER ASSISTANCE SYSTEM THEREOF**
VERFAHREN ZUR UNTERSTÜTZUNG EINES FAHRERS EINES FAHRZEUGS UND FAHRERASSISTENZSYSTEM DAFÜR
PROCÉDÉ D'ASSISTANCE D'UN CONDUCTEUR D'UN VÉHICULE ET SYSTÈME D'ASSISTANCE DU CONDUCTEUR ASSOCIÉ

(43) Date of publication of application: 11.09.2024
(73) Proprietor: Aptiv Technologies AG, 8200 Schaffhausen (CH)
(72) Inventor: WALLIN, Patrik, 41626 Gothenburg (SE); SVENSSON, Viktor, 43130 Mölndal (SE)
(74) Representative: Bardehle Pagenberg Partnerschaft mbB Patentanwälte Rechtsanwälte

(56) References cited:
- EP-A1- 1 484 014
- EP-A1- 3 929 047
- US-A1- 2020 001 883
- US-A1- 2020 391 591
- US-A1- 2022 121 867
- US-A1- 2023 025 540
- US-B1- 10 023 204

## Description

### Field of the invention

The present disclosure relates to a computer-implemented method, a computer program, and a system for assisting a driver of a vehicle.

### Background

Vehicles (cars, ships, robots etc.) nowadays are typically provided with a vehicle assistance system (such as a Advanced Driving Assistance System (ADAS)) which provides some degree of driving assistance to the driver.

Alongside such assistance systems, driver monitoring systems have long been implemented to try to improve such assistance. For instance, if it is possible to determine the awareness of the driver, the assistance system can be adapted accordingly to provide better assistance. For example, in an Automatic Emergency Brake (AEB) function, if it is possible to detect that the driver is actively engaging in the driving task, it is assumed that the driver is paying attention to the surroundings. In such a situation, in order to avoid false triggers, the assistance system may avoid triggering a collision warning or emergency brake activation later than if the driver was not active. This will avoid unnecessary and false triggers provided to the driver.

If it is detected that the driver is not active, the warning or braking system can be engaged earlier in dangerous situations, thereby mitigating or potentially avoiding otherwise imminent collisions.

The monitoring of driver awareness is analyzed using driver input on the vehicle (e.g., input on the accelerator/brake pedal, steering wheel movement, turn indicator activation etc.). With this, one can build a model of driver awareness based on the driver input for these signals.

There are also systems for monitoring the field of view of the driver. Examples thereof are disclosed in EP 3 929 097 A1 and US 10 023 204 B1.

Therefore, there is a need to provide a method and system for improving assistance systems by determining the awareness of the driver.

### Summary of the invention

In an aspect, the present invention concerns a computer-implemented method for assisting the driver of a vehicle, according to independent claim 1. This is achieved by determining, based on a gaze direction of the driver, a field of view of the driver; detecting, using an object tracking system, that one or more objects are present around the vehicle; determining that one or more of the detected objects are outside of the field of view of the driver; and performing an action if it is determined that one or more objects are outside of the field of view of the driver.

By determining the presence of objects around the vehicle, and the information about the driver's gaze, it is possible to determine if a driver is aware of an object using both information. This provides improved driver assistance by providing accurate, true positives and removing false positives.

In a further aspect, performing the action comprises providing an alert and/or providing a compensation measure based on a predetermined condition.

By providing alerts or compensation measures, it is possible to mitigate or potentially avoid otherwise dangerous situations. Additionally, it is also possible to delay the provision of compensation measures to avoid false positives.

The method further comprises determining that one or more of the detected objects are at least partly inside the field of view of the driver; and assigning a detection value for each of the detected objects determined to be at least partly inside the field of view of the driver, and storing the detection value of each of the detected object.

By providing a detection value, it is possible to properly classify if the objects were either in (or partly in) the field of view or outside and properly track them.

In a further aspect, the detection value is based on at least one of: a position of the detected object in relation to the vehicle, and the position of the detected object within the field of view of the driver.

From the above aspect, it is possible to classify different objects based on their position, for instance if it is in the direct or peripheral view of the driver, partly or fully in view.

The method further comprises retrieving the detected value of each of the detected object, determining the field of view based on the gaze direction of the driver, and that one or more objects are present around the vehicle, determining that a detected object outside the field of view was previously detected as being within the field of view, and adjusting the detection value for each of the determined objects. By retrieving and determining, it is possible to use the previous information on the object and adjust it if needed. This ensures that the action is taken based on recent information.

In a further aspect, the predetermined condition is based on at least one of: the position of a detected object in relation to the vehicle, the detection value of a detected object is less than a threshold value, a change in the position of a detected object compared to its previous position, and a rate of change in the position of a detected object compared to its previous positions.

It ensures that the action is taken based on conditions that use recent information for assessment, thus avoiding false positives.

In a further aspect, performing the action comprises adapting a trigger condition for activating an Automatic Emergency Breaking, AEB, system, based on the detection value of a detected object.

Therefore, it is possible to assist the driver by providing compensation measures based on recently calculated values.

In a further aspect, the gaze direction of the driver is detected based on an image of the driver captured by a driver monitoring camera. This makes it possible to properly image the driver.

In a further aspect, the detecting the gaze direction comprises at least one of determining the orientation of the head of the driver, and/or determining the position of the iris of at least one of the eyes of the driver. This makes it possible to accurately determine the gaze of the driver.

In a further aspect, the field of view of the driver is obtained based on one or more parameters of: the gaze direction of the driver, a presence of one of side view mirror, or a rear view mirror, or a display screen in the gaze direction, and environmental conditions.

This makes it possible to properly obtain the field of view based on if the gaze of the driver is on a side view or rear view mirror or a display screen, and the environmental conditions.

In a further aspect, the object tracking system comprises at least one of: radar, LiDAR and camera, positioned at predetermined positions on the vehicle to enable detecting the presence of one or more objects around the vehicle.

This makes it possible to detect the objects around the vehicle properly.

Another aspect of the invention is directed to a driver assistance system for a vehicle, according to independent claim 12, the driver assistance system being adapted to perform the above presented method.

In another aspect, the driver assistance system further comprising a driver monitoring camera, to capture the image of the driver, and/or an object tracking system for detecting the presence of one or more objects around the vehicle.

Another aspect of the invention is directed to a computer program comprising instructions, which when executed by a computer, causing the computer to perform the above described method, as claimed in claim 14.

Another aspect of the invention is directed to a vehicle comprising the driver assistance system as described above.

### Brief Description of the Drawings

Various aspects of the present invention are described in more detail in the following by reference to the accompanying figures without the present invention being limited to the embodiments of these figures.
- Fig. 1: shows an example implementation according to aspects of the invention where the driver is looking straight through the front windscreen.
- Fig. 2: shows an example implementation according to aspects of the invention where the driver is looking slightly to the left through the front windscreen.
- Fig. 3: shows an example implementation according to aspects of the invention where the driver is looking at the left side view mirror of the vehicle.
- Fig. 4: shows an example implementation according to aspects of the invention where the driver is looking at the rear-view mirror of the vehicle.
- Fig. 5: shows a flowchart of the exemplary implementation of the method of assisting the driver of the vehicle according to aspects of the invention.
- Fig. 6: shows a flowchart of the exemplary implementation of the method of determining the field of view according to aspects of the invention.
- Fig. 7: shows a flowchart of the exemplary implementation of the method of determining the gaze direction according to aspects of the invention.
- Fig. 8: shows a flowchart of the exemplary implementation of the method of driver visibility determination according to aspects of the invention.
- Fig. 9: shows a flowchart of the exemplary implementation of the method of assisting the driver of the vehicle according to aspects of the invention.

### Detailed Description

Monitoring techniques using driver input may have certain limitations. For instance, on the one hand, just because the driver is not inputting any controls to the vehicle, it does not necessarily mean that the driver is not aware of the current traffic situation. An example of such a situation would be when the driver does not provide any input because he is driving on a straight road that curves away from parked cars just in front of them. In this scenario, the lack of driver input by just going straight would result in a low driver awareness score, which in turn could cause the AEB system to trigger a false warning/braking intervention since it would seem like the driver is driving straight into the parked cars.

On the other hand, just because the driver is actively controlling the vehicle does not necessarily imply the driver is aware of the traffic situation. For example, when making a left turn and crossing a lane used by oncoming traffic, it might seem like the driver is aware of the traffic situation when using traditional driver monitoring techniques. In this scenario, the driver might not have spotted a fast-approaching, oncoming vehicle, while making the left turn. However, since the driver awareness would be high because of the active steering, the AEB function would trigger later since it will assume that the driver is aware of the traffic situation.

In order to improve the assistance provided to the driver, the present invention uses information about the presence of objects around the vehicle and information about where the driver has seen them. Combining this information makes it possible to determine which objects the driver has seen or has not seen.

In the following, aspects of the present invention are described in more detail with reference to the figures.

### Object tracking system

In order to detect the presence of objects around the vehicle, the vehicle is fitted with an object tracking system. The tracking system may be any one of radar, LiDAR, camera, or other sensors, or a combination thereof.

The tracking system is positioned at appropriate positions to enable detecting the presence of objects around the vehicle. Preferably, the tracking system is positioned such that it is possible to perceive objects at least 180° in front of the vehicle, 180° in front and also in the back of the vehicle, preferably 270° in front of the vehicle, and more preferably 360°around the vehicle.

The tracking system can repeatedly detect the objects' position with respect to the vehicle. Additionally, it can also determine the movement of the objects around the vehicle and thereby the velocity and acceleration of the object compared to the previous position.

### Driver Monitoring Camera

In order to determine what the driver has seen, the vehicle is provided with a driver monitoring camera to detect the gaze of the driver. The driver monitoring camera is positioned such that it takes an image of the driver inside the vehicle, preferably in a seated position. Furthermore, the camera images the head of the driver, including the orientation of the head and the eyes of the driver. The camera is configured to continually image the driver and provide the information required for continuously detecting the gaze of the driver.

Additionally, the vehicle's internal space is also mapped to determine the position of the side-view mirror or rear-view mirror.

### Gaze Direction

Based on the image that was taken by the driver monitoring camera, the gaze direction of the driver can be determined.

The gaze direction is the direction the driver is looking, which is the line-of-sight of the driver. In order to determine the gaze direction, the orientation of the head is detected. Additionally, the position of the iris of at least one of the eyes of the driver is detected.

### Field of view

The field of view is the area which is visible to the driver. This may also include the peripheral view of the driver. In the preferred embodiment, the field of view is determined based on the gaze direction of the driver.

Such the gaze of the driver can be obtained from imaging the driver, as explained above.

In a further embodiment, additionally, the visibility of the driver is determined to identify the distance which is visible to the driver. This includes detecting the visibility conditions of the surroundings, such as the light level and the atmospheric conditions. Such visibility conditions may be detected by light sensors or other external cameras.

In a further embodiment, it is determined if the driver's gaze direction is on a secondary object, such as a side-view mirror or the rear-view mirror or a display screen. This indicates if the driver is looking at the vehicle's side or rear. In such a case, the gaze direction is updated to either the vehicle's side or the vehicle's rear, based on which object the driver is looking at. Furthermore, the visibility direction is updated based on the viewing angle of the side-view mirrors or the rear-view mirror or a display screen.

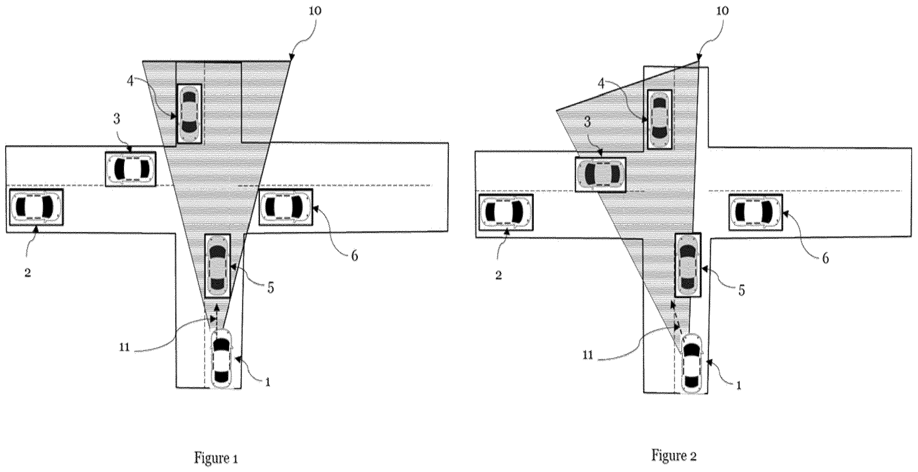

Now the invention will be explained based on the following embodiment shown in Fig. 1. As seen in the figure, vehicle 1, according to the invention, is on the road and is provided with the tracking system and the driver monitoring camera.

The tracking system has detected five objects, vehicles 2 to 6, on the road around the vehicle.

In the first example implementation, according to the invention shown in Fig. 1, the driver is looking straight through the front windscreen. Accordingly, the gaze direction 11 is determined as being straight. Subsequently, field of view 10 is determined based on the line-of-sight of the gaze direction, and in particular, on either side of the gaze direction based on the driver's viewing angle. The field of view is shown here as the shaded area.

As seen in the figure, the tracking system detected five additional objects (cars) on the road. However, only two objects 4 and 5 are within the field of view, and three objects 2, 3 and 6 are outside the field of view.

Therefore, the driver has not seen objects 2, 3 and 6, which are outside the field of view, and objects 4 and 5 which were within the field of view, were seen by the driver.

In a second example implementation according to the invention shown in Fig. 2, the driver is looking slightly to the left through the front windscreen. Accordingly, the gaze direction is determined as being slightly towards the left side of the vehicle, and subsequently, the field of view is also determined as being towards the left side of the vehicle, as shown in the figures.

As seen in the figure, objects 3, 4 and 5 are inside (at least partly) the field of view, and objects 2 and 6 are outside the field of view and not seen by the driver.

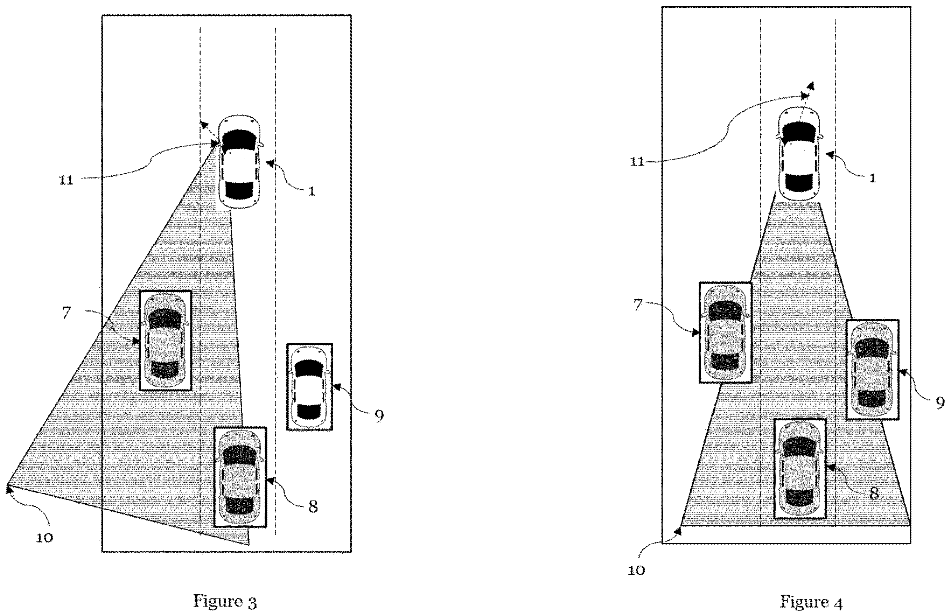

In a third example implementation according to the invention shown in Fig. 3, the driver is looking slightly to the left, but it is detected that the driver is looking at a secondary object, in this case, the left side view mirror.

Accordingly, the gaze direction is determined as being towards the rear left side of the vehicle, and subsequently, the field of view is also determined as being towards the rear left side of the vehicle in line with the side view mirror, as shown in the figures.

As seen in the figure, objects 7 and 8 are (at least partly) inside the field of view 10 of the driver, and object 9 is outside the field of view 10, and not seen by the driver.

In a fourth example implementation, according to the invention shown in Fig. 4, the driver is looking straight, but it is detected that the driver is looking slightly to the top, thus at a secondary object, in this case, the rear-view mirror.

Accordingly, the gaze direction is determined as being towards the rear of the vehicle, and subsequently, the field of view is also determined as being towards the rear of the vehicle in line with the rear-view mirror, as shown in the figures. A display screen which displays an image captured by a camera can be provided instead, or in addition to the rear-view or the side view mirror. Such a display screen may be placed in any suitable area visible to the driver and provide a field of view to the user based on the image capturing direction of the camera.

As seen in the figure, objects 7, 8 and 9 are (at least partly) inside the field of view of the driver.

Now the method of providing assistance to the driver based on the determination of the field of view is explained.

### Method for assisting a driver

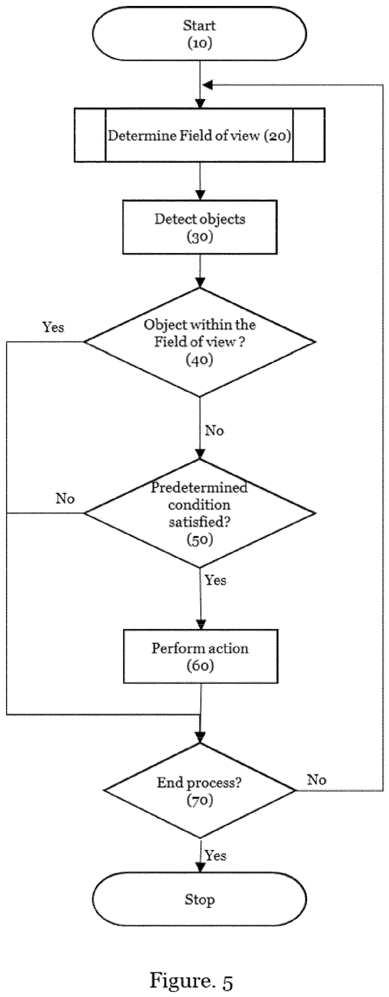

Fig. 5 is a flowchart with the method of providing assistance steps according to the present invention for providing assistance.

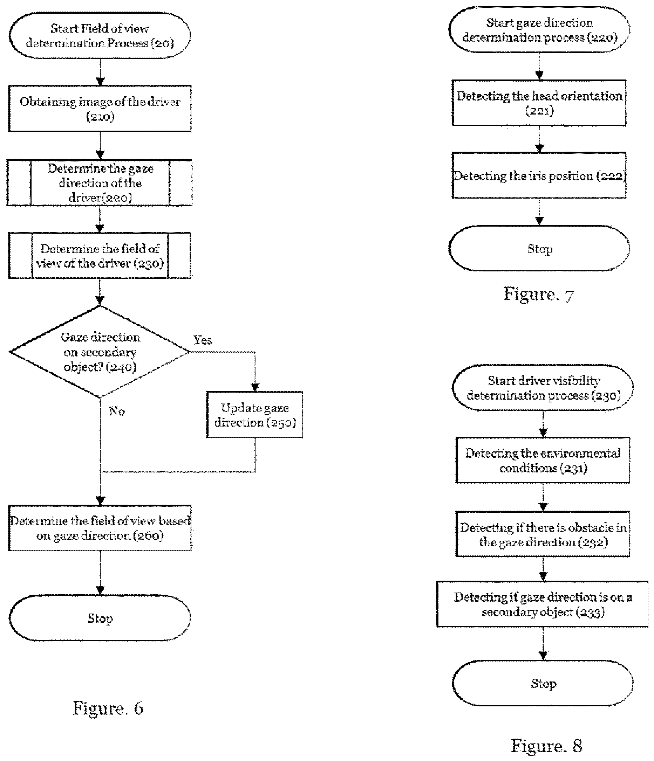

The process is started in step 10. Next, the field of view is determined based on the gaze direction in step 20. The process of determining the field of view is explained in detail in the method described in Fig. 6, which will be described later.

Next, the objects around the vehicle are determined in step 30.

Based on the information of the field of view and the object information from the tracking system, it is determined if any of the detected objects are within the field of view in step 40 and if any of the detected objects are outside the field of view.

For instance, in the example of Fig. 1, the embodiment when the driver is looking straight through the front windscreen, it was determined that only two objects 4 and 5 are within the field of view, and three objects 2, 3 and 6 are outside the field of view.

If it is determined that one or more objects are detected to be outside the visible area (No in step 40), it is further checked if a predetermined condition is satisfied (step 50), such as to perform an action.

The predetermined conditions may be set according to the appropriate situation and the requirement which are considered for safe driving and avoiding or mitigating conditions.

For instance, if the detected object is determined as not within the field of view, it is assumed that the driver is not aware of the object. Therefore, if such an object outside the field of view is determined to be close to the vehicle, it may be considered a high-priority event and leading to an imminent collision.

In such a situation, a trigger is provided for an action to be performed in step 60.

The action depends on the system being used to assist the driver. For instance, in the case of the automatic braking system, the action provided may be a compensation measure, such as changing the triggering of the braking system earlier than usual. Other measures, such as an audio and/or visual warning, can be provided earlier, ensuring the driver is prompted to become aware of the object and providing adequate time to take mitigating actions.

By triggering earlier, the total warning and brake time can be increased, mitigating or completely avoiding collisions which could otherwise have happened. Therefore, by triggering actions and providing an assistance system based on the visibility of the driver, it is possible to provide an improved and accurate determination of true positives, thus improving the assistance system.

If it is determined that one or more objects detected are within the visible area (Yes in step 40), the process moves to step 70 and either repeat the process without performing an action or ends the process.

For instance, in the example of Fig. 1, it was determined that objects 4 and 5 are within the field of view, and it is determined that the driver is aware of the object. Therefore, by avoiding actions in such a case, false positive triggering can be reduced, which would otherwise be a nuisance for the driver.

### Method for determining the field of view

Now the method of determining the field of view of step 20 according to the invention is described in detail below with reference to Fig. 6.

The image of the driver is obtained in step 201 from the driver monitoring camera. As explained earlier, the image is taken such that the driver's head and eyes are imaged.

From the image, the gaze direction of the driver is determined in step 220.

The method of gaze direction determination is explained with reference to Fig. 7.

In particular, the camera is positioned such that it takes an image of the driver inside the vehicle, preferably in a seated position. From the image, the head orientation of the driver is detected in step 221. Next, the iris position of at least one of the eyes of the driver is detected in step 222.

Based on the information of the orientation of the head and the iris position, it is possible to determine the driver's gaze direction. As it can be understood, it is possible to determine the gaze direction based on one or more of the above detections, and it not necessary to perform all the detections. For instance, the determination can be performed merely by detecting the head orientation, or the iris position.

Now coming back to Fig. 6, the visibility of the driver is detected in step 230.

The method of driver visibility determination (step 230) is now explained in detail with reference to Fig. 8.

The visibility of the driver includes detecting the visibility conditions based as the environmental conditions, according to step 231, such as the light level and the atmospheric conditions. Additionally, it is determined if there is any obstacle in the gaze direction in step 232. In case of such an obstacle, the visibility distance and the field of view are appropriately corrected.

Additionally, it may be detected if the driver's gaze direction is on a secondary object in step 233, such as a side-view mirror or the rear-view mirror. This indicates if the driver is looking at the vehicle's side or rear.

As it can be understood, it is possible to determine the driver visibility based on one or more of the above detections, and it not necessary to perform all the detections. For instance, the determination can be performed merely by detecting if the gaze direction is on a secondary object, or if there is an obstacle, or the environmental conditions. Now coming back to Fig. 6, based on the information of the secondary objects, it is now determined if the gaze direction is on a secondary object such as a side-view mirror or the rear-view mirror. In such a case, the gaze direction is updated in step 250 to be based on the gaze direction and the viewing angle of the secondary object.

Finally, the field of view is determined based on the gaze direction in step 260. The field of view extends along an angular range on either side of the line of sight determined by the gaze direction. The angular range is also determined to include a peripheral view of the driver.

### Method for assisting a driver

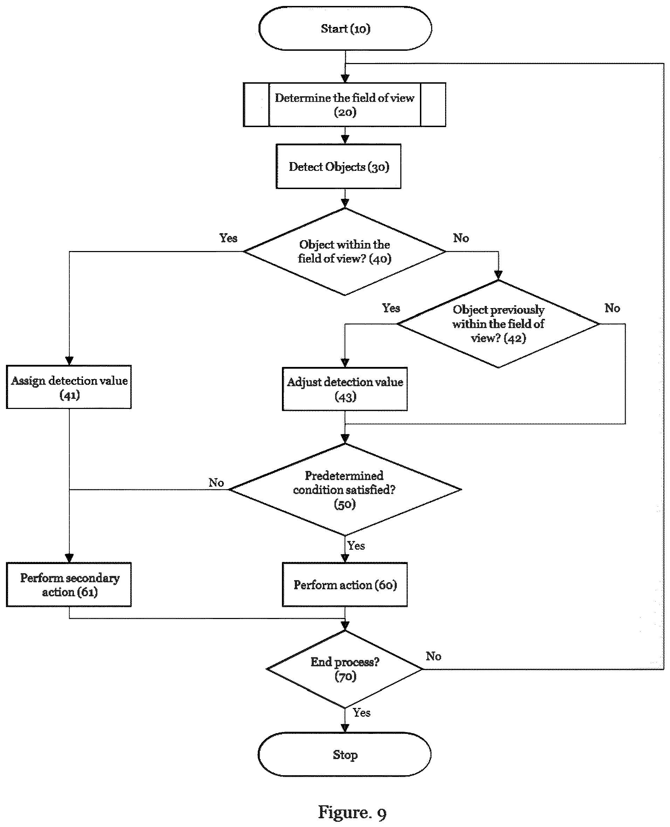

Another embodiment of the invention relates to a method for assisting a driver of a vehicle, as described in Fig. 9.

The method is similar to the previous embodiment of Fig. 5 with some additional steps. Thus, the same numbering is included for the steps which are already described and similar to the previous embodiment.

Similar to the previous method, the process includes the determination of the field of view in step 20, detecting the objects in step 30, and determining if the object is in the field of view in step 40.

Additionally, when it is determined that one or more of the detected objects are inside the field of view of the driver (Yes in Step 40), a detection value is assigned in step 41, for each of the detected objects determined to be inside the field of view of the driver. The assigned value can then be stored such that it can be retrieved at a later stage.

The detection value is assigned to classify that the object was detected. It is further possible to use the detection value to indicate the priority or importance of the detected object. For instance, the detection value may be based on the position of the object with respect to the vehicle. This will set the priority of the detected object based on how close it is to the vehicle.

In another embodiment, or additionally, the detection value may be based on where the object was positioned inside the field of view. For instance, a detection value may be assigned based on if the object was in the outer range of the field of view, implying it was in the peripheral view of the field of view or in the center of the field of view, so the driver may have directly looked at the object. This will ensure that the object in the peripheral view is given a lower detection value, as the driver may have missed it. This avoids incorrect classification of the objects and avoids false positives by providing triggers based on such objects in the peripheral view.

Based on the detection value, a secondary action may be performed in step 61. For instance, if the object was detected as being in the center of the field of view, the detection value is high as it is considered very likely that the driver has seen the object. Therefore, a secondary action, such as adapting the triggering of the AEB system, can be delayed for such an object.

Therefore, it is possible to provide compensation measures, such as delaying the triggering point based on whether the driver is aware of the object. Therefore, false positive triggering can be reduced, which would otherwise be a nuisance for the driver.

It is determined if the process ends in step 70. In case the process is not ended, the process is repeated. In particular, the step of determining the field of view in step 20 is based on the driver's gaze direction and detecting if one or more objects are present around the vehicle in step 30.

Subsequently, the step of determining the field of view is repeated and if one or more objects are present around the vehicle. Subsequently, it is determined if any of the detected objects is within the field of view in step 40, and if any of the detected objects is outside the field of view.

Suppose any of the detected objects are detected as being outside the field of view, it is now determined in step 42, if these detected objects were previously detected as being within the previously determined field of view.

This is to assess how long it has been since the object was last detected as being within the field of view to determine when the driver was last aware of the object. In case it was not detected as being previously within the field of view (No in step 42), the process moves to step 50.

In case it was determined that the object was previously within the previously determined field of view (Yes in Step 42), the detection value which was previously assigned to the object during the previous detection is now adjusted to a new detection value in step 43. For instance, if the object was detected as previously in the field of view and now is no longer in the field of view, it means that the driver was previously aware of the object but is no longer visible to the driver. This can be performed by retrieving the detection value which was assigned in step 41, and adjusting the detection value. The adjusted detection value is then stored. Therefore, the detection value that was originally assigned is reduced, and the reduction depends on how long ago the object was last determined as being present in the field of view.

Now moving to step 50, it is determined if one or more objects that were now detected are outside the field of view (No in step 40). It is further checked if a predetermined condition is satisfied (step 50) so that an action may be performed.

As indicated earlier, the predetermined condition is set according to the appropriate situation and the requirements which are considered for safe driving and avoiding mitigating conditions.

In addition to the previously indicated predetermined conditions (position of the object to the vehicle), further conditions may be provided.

In the present embodiment, an action may be performed if the detection value, after adjusting, is below a certain threshold. That is, if it was determined that the detected object was previously within the field of view, the driver might be aware of the object. However, the longer it has been since the object was within the field of view, the more likely it is that the driver is no longer aware of the object.

Therefore, if the object was within the field of view at a previous time but has not been within the field of view now for some time, the detection value can be adjusted in each cycle of detection when required, thus reducing the detection value over time. Once the detection value falls below a certain threshold, it is no longer classified as aware to the driver. Therefore, action, such as alerting and/or providing a compensation measure, may be performed in order to ensure safe driving and mitigating conditions.

By providing a threshold, it is possible to provide an optimal time to take action, by providing a balance between taking an action too early, or too late.

That is, it ensures that action is not taken too early (i.e., too soon after the object was detected within the field of view) so as to annoy the driver or provide false negatives. At the same time, action is not taken too late by relying on old information (i.e., too long after the object was last detected as being within the field of view), thus not compromising on safety.

In a further embodiment, or additionally, the predetermined condition when an action is taken may be based on the change in the position of the object compared to the previous position.

Since it is possible to track the objects and determine their position repeatedly, it can be determined if the object not within the field of view has now changed its position. Based on the change in the position, it would be necessary to trigger the action. For instance, if it is determined that the object, which was earlier determined as within the field of view and thus aware to the driver, is now at a position which may be of higher priority or may lead to a dangerous situation, an action, such as to alert and/or providing a compensation measure may be performed to avoid such situation.

Additionally, the predetermined situation may be when an action may be taken based on a rate of change in the position of a detected object compared to its previous positions. Since the tracking process is repeatedly performed, it is also possible to detect if the acceleration or speed of the object had changed compared to when the object was last detected as being within the field of view and, thus, when the driver was last aware of it.

This ensures that the conditions, such as unexpected behaviour of the object compared to what was expected based on the instance when it was last detected in the field of view, can be captured and suitable mitigating circumstances provided.

For instance, the driver, aware of a detected object which was travelling at 50 kph when it was last detected within the field of view, expects the object to overtake at a certain time. However, suppose the previously detected object accelerates or speeds up significantly. In that case, the previous assumption of the driver based on the previous awareness is no longer correct as the object may be relatively closer to the vehicle earlier than expected. In such a case, an action such as an alert and/or other compensation measures may be provided earlier than in other cases.

This provides a robust and dynamic adaptation for assisting the driver based on the change in the other object.

With the present invention, it is possible to provide an improved driver assistance method.

The invention also provides a driver assistance system having suitable processing device which can perform the method described above.

In particular, the method may be implemented in terms of a computer program which may be executed on any suitable data processing device comprising means (e.g., a memory and one or more processors operatively coupled to the memory) being configured accordingly. The computer program may be stored as computer-executable instructions on a non-transitory computer-readable medium.

Embodiments of the present disclosure may be realized in any of various forms. For example, in some embodiments, the present invention may be realized as a computer-implemented method, a computer-readable memory medium, or a computer system. In some embodiments, a non-transitory computer-readable memory medium may be configured so that it stores program instructions and/or data, where the program instructions, if executed by a computer system, cause the computer system to perform a method described above.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein. device may be realized in any of various forms.

The driver assistance system is provided in a vehicle, such as automobiles, robots, etc. Examples of features provided in the disclosure are intended to be illustrative rather than restrictive unless stated otherwise.

The scope of the present invention is defined by the appended claims. Modifications are possible within the scope of the present invention.

## Claims

1. A computer-implemented method for assisting a driver of a vehicle, the method comprising the steps of:
determining (20), based on a gaze direction of the driver, a field of view of the driver;
detecting (30), using an object tracking system, that one or more objects are present around the vehicle;
determining (40) that one or more of the detected objects are either partly inside, or outside of the field of view of the driver;
assigning (41) a detection value for each of the detected objects determined to be at least partly inside the field of view of the driver;
if a detected object outside the field of view of the driver was previously detected as being within the field of view of the driver, adjusting (43) the detection value; and
performing an action (60) if it is determined that one or more objects are outside of the field of view of the driver and having a detection value below a predefined threshold.

2. The computer-implemented method of claim 1, wherein performing the action comprises providing an alert and/or providing a compensation measure, based on a predetermined condition.

3. The computer-implemented method of any of the preceding claims, further comprising:
storing, the detection value of each of the detected object.

4. The computer-implemented method of claim 3, wherein the detection value is based on at least one of: a position of the detected object in relation to the vehicle, and the position of the detected object within the field of view of the driver.

5. The computer-implemented method of any of claims 3 or 4, further comprising:
retrieving the detected value of each of the detected object,
determining the field of view of the driver based on the gaze direction of the driver, and that one or more objects are present around the vehicle, and
determining (42) that a detected object outside the visibility area was previously detected as being within the field of view of the driver;
adjusting (43) the detection value for each of the determined objects.

6. The computer-implemented method of claims 2 to 5, wherein the predetermined condition is based on at least one of:
the position of a detected object in relation to the vehicle,
the detection value of a detected object is less than a threshold value,
a change in the position of a detected object compared to its previous position, and
a rate of change in the position of a detected object compared to its previous positions.

7. The computer-implemented method of any of claims 3 to 6, wherein performing the action comprises adapting a trigger condition for activating an Automatic Emergency Breaking, AEB, system, based on the detection value of a detected object.

8. The computer-implemented method of any of the preceding claims, wherein the gaze direction of the driver is detected based on an image of the driver captured by a driver monitoring camera.

9. The computer-implemented method of any of the preceding claims, wherein detecting (220) the gaze direction comprises at least one of:
determining (221) the orientation of the head of the driver, and/or
determining (222) the position of the iris of at least one of the eyes of the driver.

10. The computer-implemented method of any of the preceding claims, wherein the field of view of the driver is obtained based on one or more parameters of: the gaze direction of the driver, a presence of one of a side view mirror, or a rear view mirror, or a display screen in the gaze direction, and environmental conditions.

11. The computer-implemented method of any of the preceding claims, wherein the object tracking system comprises at least one of: radar, LiDAR and camera, positioned at predetermined positions on the vehicle to enable detecting the presence of one or more objects around the vehicle.

12. A driver monitoring system for a vehicle, comprising a processor being adapted to perform the method of any one of the claims 1-11.

13. The driver monitoring system of claim 12, further comprising a driver monitoring camera, to capture the image of the driver, and/or an object tracking system for detecting the presence of one or more objects around the vehicle.

14. A computer program comprising instructions, which when executed by a computer, causing the computer to perform the method of any one of the claims 1 to 11.

15. A vehicle comprising the driver monitor system according to claim 12.

## Patentansprüche

1. Ein Computerimplementiertes Verfahren zum Unterstützen eines Fahrers eines Fahrzeugs, wobei das Verfahren die Schritte umfasst:
Bestimmen (20), basierend auf einer Blickrichtung des Fahrers, eines Sichtfelds des Fahrers;
Erfassen (30), unter Verwendung eines Objektverfolgungssystems, dass ein oder mehrere Objekte um das Fahrzeug herum vorhanden sind;
Bestimmen (40), dass eines oder mehrere der erfassten Objekte entweder teilweise innerhalb oder außerhalb des Sichtfelds des Fahrers sind;
Zuweisen (41) eines Erfassungswerts für jedes der erfassten Objekte, von denen bestimmt wurde, dass sie zumindest teilweise innerhalb des Sichtfelds des Fahrers sind;
wenn ein erfasstes Objekt außerhalb des Sichtfelds des Fahrers zuvor als innerhalb des Sichtfelds des Fahrers liegend erfasst wurde, Anpassen (43) des Erfassungswerts; und
Durchführen einer Aktion (60), wenn bestimmt wird, dass ein oder mehrere Objekte außerhalb des Sichtfelds des Fahrers sind und einen Erfassungswert unter einem vordefinierten Schwellenwert aufweisen.

2. Das Computerimplementierte Verfahren nach Anspruch 1, wobei das Durchführen der Aktion das Bereitstellen einer Warnung und/oder das Bereitstellen einer Kompensationsmaßnahme basierend auf einer vorbestimmten Bedingung umfasst.

3. Das Computerimplementierte Verfahren nach einem der vorhergehenden Ansprüche, ferner umfassend:
Speichern des Erfassungswerts jedes der erfassten Objekte.

4. Das Computerimplementierte Verfahren nach Anspruch 3, wobei der Erfassungswert auf mindestens einem basiert von: einer Position des erfassten Objekts in Bezug auf das Fahrzeug und der Position des erfassten Objekts innerhalb des Sichtfelds des Fahrers.

5. Das Computerimplementierte Verfahren nach einem der Ansprüche 3 oder 4, ferner umfassend:
Abrufen des erfassten Werts jedes der erfassten Objekte,
Bestimmen des Sichtfelds des Fahrers basierend auf der Blickrichtung des Fahrers und darauf, dass ein oder mehrere Objekte um das Fahrzeug herum vorhanden sind, und
Bestimmen (42), dass ein erfasstes Objekt außerhalb des Sichtbarkeitsbereichs zuvor als innerhalb des Sichtfelds des Fahrers befindlich erfasst wurde;
Anpassen (43) des Erfassungswerts für jedes der bestimmten Objekte.

6. Das Computerimplementierte Verfahren nach den Ansprüchen 2 bis 5, wobei die vorbestimmte Bedingung auf mindestens einem basiert von:
der Position eines erfassten Objekts in Bezug auf das Fahrzeug,
der Erfassungswert eines erfassten Objekts ist kleiner als ein Schwellenwert,
einer Änderung der Position eines erfassten Objekts im Vergleich zu seiner vorherigen Position, und
einer Änderungsrate der Position eines erfassten Objekts im Vergleich zu seinen vorherigen Positionen.

7. Das Computerimplementierte Verfahren nach einem der Ansprüche 3 bis 6, wobei das Durchführen der Aktion das Anpassen einer Auslösebedingung zum Aktivieren eines automatischen Notbremssystems (Automatic Emergency Breaking, AEB) basierend auf dem Erfassungswert eines erfassten Objekts umfasst.

8. Das Computerimplementierte Verfahren nach einem der vorhergehenden Ansprüche, wobei die Blickrichtung des Fahrers basierend auf einem Bild des Fahrers erfasst wird, das von einer Fahrerüberwachungskamera aufgenommen wurde.

9. Das Computerimplementierte Verfahren nach einem der vorhergehenden Ansprüche, wobei das Erfassen (220) der Blickrichtung mindestens eines umfasst von:
Bestimmen (221) der Ausrichtung des Kopfes des Fahrers, und/oder
Bestimmen (222) der Position der Iris von mindestens einem der Augen des Fahrers.

10. Das Computerimplementierte Verfahren nach einem der vorhergehenden Ansprüche, wobei das Sichtfeld des Fahrers basierend auf einem oder mehreren Parametern erhalten wird von: der Blickrichtung des Fahrers, einem Vorhandensein eines Seitenspiegels oder eines Rückspiegels oder eines Anzeigebildschirms in der Blickrichtung und Umgebungsbedingungen.

11. Das Computerimplementierte Verfahren nach einem der vorhergehenden Ansprüche, wobei das Objektverfolgungssystem mindestens eines umfasst von: Radar, LiDAR und Kamera, die an vorbestimmten Positionen am Fahrzeug positioniert sind, um das Erfassen des Vorhandenseins eines oder mehrerer Objekte um das Fahrzeug herum zu ermöglichen.

12. Ein Fahrerüberwachungssystem für ein Fahrzeug, umfassend einen Prozessor, der angepasst ist, um das Verfahren nach einem der Ansprüche 1-11 durchzuführen.

13. Das Fahrerüberwachungssystem nach Anspruch 12, ferner umfassend eine Fahrerüberwachungskamera, um das Bild des Fahrers aufzunehmen, und/oder ein Objektverfolgungssystem zum Erfassen des Vorhandenseins eines oder mehrerer Objekte um das Fahrzeug herum.

14. Ein Computerprogramm, umfassend Anweisungen, die, wenn sie von einem Computer ausgeführt werden, den Computer veranlassen, das Verfahren nach einem der Ansprüche 1 bis 11 durchzuführen.

15. Ein Fahrzeug, umfassend das Fahrerüberwachungssystem nach Anspruch 12.

## Revendications

1. Un procédé implémenté par calculateur pour l'assistance à un conducteur d'un véhicule, le procédé comprenant les étapes de :
détermination (20), sur la base d'une direction du regard du conducteur, d'un champ de vision du conducteur ;
détection (30), à l'aide d'un système de suivi d'objet, qu'un ou plusieurs objets sont présents autour du véhicule ;
détermination (40) qu'un ou plusieurs des objets détectés sont soit partiellement à l'intérieur, soit à l'extérieur du champ de vision du conducteur ;
attribution (41) d'une valeur de détection pour chacun des objets détectés qui est déterminé comme étant au moins partiellement à l'intérieur du champ de vision du conducteur ;
si un objet détecté à l'extérieur du champ de vision du conducteur avait été précédemment détecté comme étant à l'intérieur du champ de vision du conducteur, ajustement (43) de la valeur de détection ; et
exécution d'une action (60) s'il est déterminé qu'un ou plusieurs objets sont à l'extérieur du champ de vision du conducteur et ont une valeur de détection au-dessous d'un seuil prédéfini.

2. Le procédé implémenté par calculateur de la revendication 1, dans lequel l'exécution de l'action comprend la délivrance d'une alerte et/ou la délivrance d'une mesure de compensation, sur la base d'une condition prédéterminée.

3. Le procédé implémenté par calculateur de l'une des revendications précédentes, comprenant en outre :
le stockage de la valeur de détection de chacun des objets détectés.

4. Le procédé implémenté par calculateur de la revendication 3, dans lequel la valeur de détection est basée sur au moins l'une d'entre : une position de l'objet détecté par rapport au véhicule, et la position de l'objet détecté à l'intérieur du champ de vision du conducteur.

5. Le procédé implémenté par calculateur de l'une des revendications 3 ou 4, comprenant en outre :
la récupération de la valeur détectée de chacun des objets détectés,
la détermination du champ de vision du conducteur sur la base de la direction du regard du conducteur, et du fait qu'un ou plusieurs objets sont présents autour du véhicule, et
la détermination (42) qu'un objet détecté à l'extérieur de la zone de visibilité avait été précédemment détecté comme étant à l'intérieur du champ de vision du conducteur ;
l'ajustement (43) de la valeur de détection pour chacun des objets déterminés.

6. Le procédé implémenté par calculateur des revendications 2 à 5, dans lequel la condition prédéterminée est basée sur au moins l'une parmi :
la position par rapport au véhicule d'un objet détecté,
la valeur de détection d'un objet détecté qui est inférieure à une valeur de seuil,
une modification de la position d'un objet détecté par rapport à sa position antérieure, et
une vitesse de changement de la position d'un objet détecté par rapport à ses positions antérieures.

7. Le procédé implémenté par calculateur de l'une des revendications 3 à 6, dans lequel l'exécution de l'action comprend l'adaptation d'une condition de déclenchement pour l'activation d'un système de freinage automatique d'urgence, AEB, sur la base de la valeur de détection d'un objet détecté.

8. Le procédé implémenté par calculateur de l'une des revendications précédentes, dans lequel la direction du regard du conducteur est détectée sur la base d'une image du conducteur capturée par une caméra de surveillance du conducteur.

9. Le procédé implémenté par calculateur de l'une des revendications précédentes, dans lequel la détection (220) de la direction de regard comprend au moins l'une parmi :
la détermination (221) de l'orientation de la tête du conducteur, et/ou la détermination (222) de la position de l'iris d'au moins l'un des yeux du conducteur.

10. Le procédé implémenté par calculateur de l'une des revendications précédentes, dans lequel le champ de vision du conducteur est obtenu sur la base d'un ou plusieurs paramètres parmi : la direction du regard du conducteur, une présence dans la direction du regard de l'un parmi un rétroviseur latéral, ou un rétroviseur arrière, ou un écran d'affichage, et des conditions environnementales.

11. Le procédé implémenté par calculateur de l'une des revendications précédentes, dans lequel le système de suivi de l'objet comprend au moins l'un parmi : un radar, un lidar et une caméra, positionnés sur le véhicule en des positions prédéterminées pour permettre la détection de la présence d'un ou plusieurs objets autour du véhicule.

12. Un système de surveillance du conducteur pour un véhicule, comprenant un processeur qui est apte à mettre en œuvre le procédé de l'une des revendications 1 à 11.

13. Le système de surveillance du conducteur de la revendication 12, comprenant en outre une caméra de surveillance du conducteur, pour capturer l'image du conducteur, et/ou un système de suivi d'objet pour détecter la présence d'un ou plusieurs objets autour du véhicule.

14. Un programme informatique comprenant des instructions qui, lorsqu'elles sont exécutées par un calculateur, font en sorte que le calculateur mette en œuvre le procédé de l'une des revendications 1 à 11.

15. Un véhicule comprenant le système de surveillance du conducteur selon la revendication 12.
